Europäisches Patentamt

**European Patent Office**

**Office européen des brevets**

(11) Veröffentlichungsnummer: **0 674 456 A2**

(12) **EUROPÄISCHE PATENTANMELDUNG**

(21) Anmeldenummer: **95102912.3**

(22) Anmeldetag: **01.03.95**

(51) Int. Cl.6: **H04Q 11/00**, H04B 10/207, H04L 9/00

(30) Priorität: **08.03.94 DE 4407745**

(43) Veröffentlichungstag der Anmeldung:
**27.09.95 Patentblatt 95/39**

(84) Benannte Vertragsstaaten:
**AT BE CH DE FR GB IT LI**

(71) Anmelder: **SIEMENS AKTIENGESELLSCHAFT**
**Wittelsbacherplatz 2**
**D-80333 München (DE)**

(72) Erfinder: **Kiefer, Peter, Dipl.-Ing.**
**Auf der Eierwiese 1A**
**D-82031 Grünwald (DE)**
Erfinder: **Legner, Stefan, Dipl.-Ing.**
**Fodermayrstr. 25**
**D-80993 München (DE)**

(54) **Passives optisches Übertragungsnetz.**

(57) Es wird ein Schutz vor Zugriff auf Daten in passiven optischen Netzen (PON) dadurch erreicht, daß die Downstream-Daten für jede periphere optische Netzabschluß-Einheit (ONU) mit einem Code verschlüsselt werden, der nur der jeweiligen peripheren optischen Abschlußeinheit bekannt ist und aus den unverschlüsselten Upstream-Daten der jeweiligen peripheren optischen Abschlußeinheit gewonnen wird. Die Erfindung läßt sich in Teilnehmeranschlußnetzen mit Lichtwellenleitern (Fiber in the Loop) anwenden.

FIG 3

Die Erfindung bezieht sich auf ein passives optisches Netz gemäß dem Oberbegriff des Patentanspruchs 1.

Ein passives optisches Übertragungsnetz, wie es beispielsweise aus dem Aufsatz von H-H. Grusdt und H. Sailer: "Teilnehmeranschlußtechnik der 90er Jahre" in der Zeitschrift Telcom Report 15 (1992), Heft 3-4, Seiten 164 bis 167 bekannt ist, hat die Eigenschaft, daß eine angeschlossene periphere Netzwerk-Abschlußeinheit (ONU = Optical Network Unit) den Datenstrom aller an diesem Netz angeschlossenen Einheiten erhält. Mit einer sehr aufwendigen elektronischen Schaltung wäre es theoretisch möglich, den Downstream-Datenstrom, z.B. ein Telefongespräch, mitzuhören. Upstream-Daten einer am selben passiven optischen Netz hängenden peripheren optischen Netzwerk-Abschlußeinheit können dagegen aufgrund der Richteigenschaften des passiven optischen Splitters nicht empfangen werden.

Der Erfindung liegt die Aufgabe zugrunde, in einem passiven optischen Übertragungsnetz mit FITL (Fiber in the Loop) einen Schutz vor Zugriff auf Daten zu den Teilnehmern unter Einsatz eines verhältnismäßig geringen Aufwands zu erreichen.

Diese Aufgabe wird bei einem passiven optischen Netz (PON) gemäß dem Oberbegriff des Patentanspruchs 1 durch die im kennzeichnenden Teil dieses Anspruchs angegebenen Merkmale gelöst. Die Erfindung eröffnet eine Möglichkeit, die Downstream-Daten für jede periphere optische Abschlußeinheit mit einem Code zu verschlüsseln, der nur der jeweiligen peripheren optischen Abschlußeinheit bekannt ist und aus den unverschlüsselten Upstream-Daten der jeweiligen peripheren optischen Netzabschlußeinheit gewonnen wird.

Zweckmäßige Weiterbildungen der Erfindung sind in den Unteransprüchen angegeben.

Die Erfindung wird im folgenden anhand von vier Figuren erläutert.

Es zeigen

Fig. 1    einen Rahmenaufbau des optisch von den peripheren optischen Abschlußeinheiten (ONUs) zum zentralen optischen Teilnehmer-Anschlußknoten (OLT) zu übertragenden elektrischen TDMA-Signals,

Fig. 2    den Rahmenaufbau nach Fig. 1, jedoch mit Schlüsselnummer-Bits,

Fig. 3    eine schematische Darstellung des Chiffrierungsprinzips nach der Erfindung, und

Fig. 4    Zustandsübergänge der Schlüsselnummer-Bits.

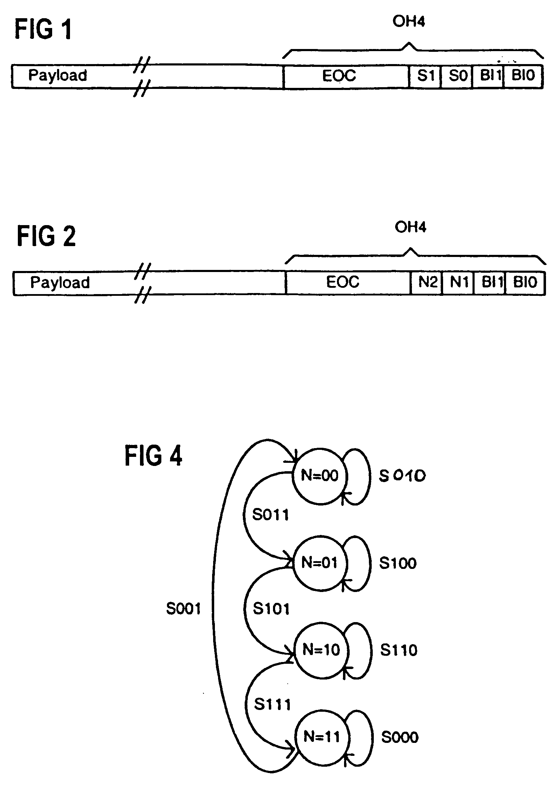

Wie in Fig. 1 gezeigt ist, enthält der Rahmenaufbau des optisch von den peripheren optischen Abschlußeinheiten ONU zum zentralen optischen Teilnehmer-Anschlußknoten OLT zu übertragenden elektrischen TDMA-Signals außer den die Nachrichten beinhaltenden Payload-Bytes ein sogenanntes Overhead-Byte OH4. Dieses OH4-Byte ist das letzte Byte im Rahmenaufbau einer jeden peripheren optischen Abschlußeinheit ONU, das neben einem 4-Bit-breiten Meldungskanal EOC noch zwei Parity-Bits BI1 und BI0 sowie zwei Spare-Bits S1 und S0 enthält. Aufgrund der Tatsache, daß der Meldungskanal EOC und die Parity-Bits BI1, BI0 ständig wechselnde Bitmuster enthalten, läßt sich das OH4-Overhead-Byte als Schlüssel für die Dechiffrierung der Payload-Bytes in Downstream-Richtung verwenden. Das Overhead-Byte OH4 selbst wird nicht verschlüsselt. Für jeden Rahmen wird damit ein neuer Schlüssel verwendet.

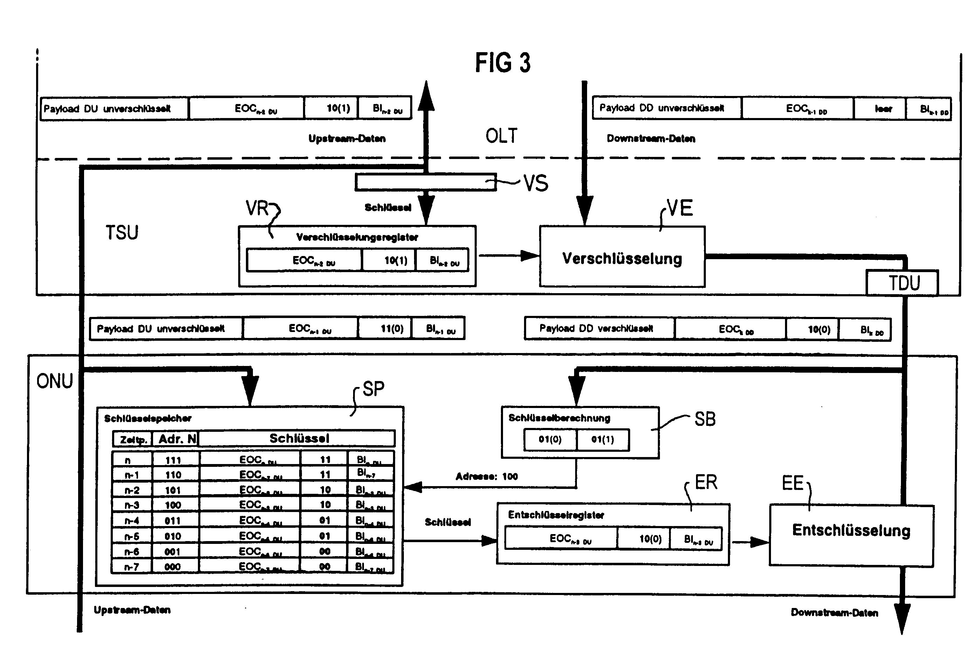

In Fig. 3, welche das Chiffrierungsprinzip nach der Erfindung schematisch darstellt, ist auf der linken Seite der Datenfluß von einer beispielhaft dargestellten, peripheren optischen Netzabschlußeinheit ONU zum zentralen optischen Teilnehmer-Anschlußknoten OLT in Upstream-Richtung und auf der rechten Seite der Datenfluß vom zentralen optischen Teilnehmer-Anschlußknoten OLT zu den peripheren optischen Abschlußeinheiten ONU in Downstream-Richtung gezeigt. Eine Schalteinheit TSU (Time Slot Interface Unit) im optischen Teilnehmer-Anschlußknoten OLT benutzt den empfangenen Overhead-Kanal OH4 einer jeden der bis zu 32 angeschlossenen peripheren optischen Netzabschluß-Einheiten ONU, um die Downstream-Daten des nächsten zu sendenden Rahmens der entsprechenden optischen Netzabschluß-Einheit ONU mit dem Overhead-Byte OH4 zu verschlüsseln. Die periphere optische Netzabschluß-Einheit ONU muß den empfangenen Rahmen mit demselben Byte entschlüsseln. Da die Laufzeit bis zum Empfang eines mit einem bestimmten OH4-Byte verschlüsselten Rahmens jedoch zwischen zwei und fünf Rahmen variieren kann, wird ein Mechanismus verwendet, mit dem die Verzögerung zwischen dem Abspeichern eines Schlüssels in einem Schlüsselspeicher SP in der peripheren optischen Abschlußeinheit ONU und dem Empfang eines mit diesem Schlüssel chiffrierten Rahmens bestimmt werden kann.

Dazu werden in den beiden zur Verfügung stehenden Spare-Bits S1 und S0 die zwei höchstwertigen Bits N2 und N1 eines 3 Bit-Zählers zum optischen Teilnehmer-Anschlußknoten OLT gesendet. In Fig. 2 ist der Rahmenaufbau mit den Schlüsselnummer-Bits N2 und N1 dargestellt. Der genannte Zähler dient dazu, die Schlüssel im Overhead-Byte OH4 durchzunumerieren. Je zwei nacheinander gesendete unterschiedliche Schlüssel erhalten dabei die gleiche Schlüsselnummer. In der peripheren optischen Abschlußeinheit ONU wird der 8-Byte-Speicher SP geführt, in dem die acht letzten Schlüssel unter der Adresse N = N2N1N0, d.h.

ihrer vollständigen Schlüsselnummer, abgespeichert sind.

Die Schalteinheit TSU (Time Slot Interface Unit) hat die Aufgabe, für jede der bis zu 32 angeschlossenen peripheren optischen Netzabschluß-Einheiten ONU die letzten über den Upstream-Weg empfangenen Schlüssel, d.h. das Overhead-Byte OH4, abzuspeichern, die Payload-Bytes des nächsten zu sendenden Rahmens aller peripheren optischen Netzabschluß-Einheiten ONU im Downstream-Weg mit dem jeweiligen Schlüssel zu codieren und die Bits N2 und N1 aus dem Overhead-Byte OH4 in die entsprechenden Positionen des Downstream-Overhead-Bytes OH4 einzutragen. Das Overhead-Byte OH4 in Downstream-Richtung wird nicht verschlüsselt.

Die Entschlüsselungsschaltung der peripheren optischen Abschlußeinheit ONU decodiert aus den beiden Bits N2 und N1 eines empfangenen Rahmens den zur Chiffrierung des nächsten Rahmens verwendeten Schlüssel. Dazu werden die jeweils letzten Schlüsselnummer-Bits $N2^{-1}$ und $N1^{-1}$ abgespeichert und aus dem Zustandsübergang dieser Bits das geringste signifikante Bit (LSB) N0 der vollständigen Schlüsselnummer rekonstruiert. Damit ist die Nummer des Schlüssels, mit dem der gerade empfangene Rahmen codiert wurde, bekannt. Der nächste Rahmen kann sofort mit dem Schlüssel decodiert werden, der dem Zählerstand N + 1 = N2N1N0 + 1 zugeordnet ist. Sowohl Ver- als auch Entschlüsselung erfolgen damit ohne Zwischenspeicherung von Rahmen.

Es ergeben sich die in Fig. 4 gezeigten Zustandsübergänge, die in der peripheren optischen Netzabschluß-Einheit ONU decodiert werden müssen. N repräsentiert die beiden Bits der Schlüsselnummer, S ist der Schlüssel, der zur Dechiffrierung des nächsten Rahmens benutzt wird.

Betrachtet die periphere optische Netzabschluß-Einheit ONU bei Synchronisationsverlust den nächsten empfangenen Schlüsselnummerwert (bzw. beim Einschalten den ersten empfangenen Wert) so, als hätte ein Übergang auf diesen Wert stattgefunden, so wird mit einer Wahrscheinlichkeit von 50 % die direkte Synchronisation erreicht. Spätestens nach zwei Rahmen ist die Synchronisierung wieder hergestellt. Die Erstsynchronisation kann durch Wahl geeigneter Reset-Werte in den Schlüsselspeichern und den Schlüsselnummerregistern erleichtert werden.

Kommt es aufgrund von Übertragungsfehlern zu Bitverfälschungen im Meldungskanal EOC oder in den Parity-Bits Bl1, Bl0, so werden die entsprechenden Bits in Downstream-Richtung falsch verschlüsselt, was in jedem Zeitschlitz dieses Rahmens zu Bitfehlern führt. Eine Bitverfälschung der Schlüsselnummer N2, N1 in Upstream- oder Downstream-Richtung bewirkt, daß ein falscher Schlüssel zur Dechiffrierung des nächsten Rahmens verwendet wird und damit die gesamte Payload-Daten verfälscht werden.

Das Auftreten nicht erlaubter Zustandsübergänge kann dazu benutzt werden, einzelne Bitfehler bei der Übertragung der Schlüsselnummer zu korrigieren: Ergibt sich aufgrund eines Bitfehlers ein nicht erlaubter Zustandsübergang, so wird in zweckmäßiger Weise diese Schlüsselnummer ignoriert und stattdessen der korrekte Schlüssel (letzter Schlüssel + 1) zur Decodierung benutzt. Zusätzlich muß dann jedoch ein Signalzeichen (Flag) gesetzt werden, das anzeigt, daß eine Nummernkorrektur stattgefunden hat, da nur einmal korrigiert werden darf. Andernfalls läßt sich kein Aufsynchronisieren ermöglichen. Diese Überwachung auf erlaubte Zustandsübergänge erhöht den Aufwand an Steuerlogik.

Die Schalteinheit TSU (Time Slot Interface Unit) im zentralen optischen Teilnehmer-Anschlußknoten OLT führt im Ausführungsbeispiel einen 32 Byte-Speicher VS für die Upstream-Overhead-Bytes OH4 von maximal 32 an einem passiven optischen Netz angeschlossenen peripheren optischen Netzabschluß-Einheiten ONU. Zwischen der Schalteinheit TSU und einer elektrooptischen Auskoppeleinheit TDU werden die Daten über einen 8 Bit breiten Bus in Form von Basic Blocks übertragen, die sich wiederum aus den Payload-Daten und den Overhead-Bytes aller 32 peripheren optischen Netzabschlußeinheiten ONU zusammensetzen. Die Verschlüsselungsschaltung in Downstream-Richtung enthält ein 8-Bit-Verschlüsselungsregister VR, das mit dem Schlüssel im Overhead-Byte OH4 geladen wird, der von der entsprechenden peripheren optischen Netzabschluß-Einheit ONU im letzten Upstream-Basic-Block im Overhead-Byte OH4 gesendet wurde. Im einfachsten Fall erfolgt die Verschlüsselung der Payload-Daten in einer Verschlüsselungseinrichtung VE mit acht Exklusiv-Oder-Gattern. Während der Overhead-Bytes OH1, OH2 und OH4 findet keine Verschlüsselung statt, und im Overhead-Byte OH4 werden die Bits N2 und N1 des Schlüssels direkt in die entsprechenden Positionen eingefügt. Das Laden des Registers VR bietet sich zur Zeit des Overhead-Bytes OH1 an, da dieses Byte einem jeden Paket von ONU-Daten vorangestellt ist.

Da der Upstream-Rahmen auf dem TSU/TDU-Interface im zentralen optischen Teilnehmer-Anschlußknoten OLT mindestens um einen Basic-Block gegenüber dem Downstream-Rahmen verzögert ist, kann ein konfliktfreier Lese- und Schreibzugriff auf den Schlüsselspeicher VS realisiert werden, und es kann kein gerade benötigter Schlüssel überschrieben werden. Eine Steuerlogik hat die Aufgabe, die Upstream-Overhead-OH4-Bytes abzuspeichern, die Schlüssel für die Downstream-Daten der nächsten peripheren optischen Netzabschlußeinheit ONU in das Register zu laden, die Verschlüsselung für die Payload-Daten freizugeben und das Einfügen der Nummernbits N2, N1 in das Downstream-Overhead-Byte OH4 zu gewährleisten.

Auf seiten des zentralen optischen Teilnehmer-Anschlußknotens OLT ist somit an Hardware-Aufwand zusätzlich erforderlich:

- 32 x 8 Bit Schlüsselspeicher VS zur Speicherung der Downstream-Overhead-OH4-Bytes,
- 8-Bit Verschlüsselungsregister VR zur Chiffrierung in Downstream-Richtung,
- 8 Exklusiv-Oder-Gatter zur Chiffrierung in einer Verschlüsselungseinrichtung VE,
- Erzeugung der Rahmensignale für die Overhead-Bytes OH1, OH2, OH4, etc.,
- Erzeugung der Steuersignale zum Abspeichern und Auslesen der Schlüssel, Freigabe der Chiffrierung und Einfügen der Schlüsselnummer in Downstream-Richtung.

In einer Kontroll-Baugruppe jeder der angeschlossenen peripheren optischen Netzabschluß-Einheiten ONU wird ein 3-Bit-Zähler zur Adressierung des 8-Byte-Speichers SP geführt, in dem die letzten acht Schlüssel, d.h. die letzten acht Overhead-Bytes OH4, abgespeichert werden. Die Bits N2 und N1 dieses Zählers werden in den seriellen Datenstrom der Upstream-Daten eingefügt und das komplette Overhead-Byte OH4 unter der Adresse N2N1N0 abgespeichert.

Zur Entschlüsselung in Downstream-Richtung werden in einer Einrichtung zur Schlüsselberechnung zusätzliche Register zur Speicherung der aktuellen und der letzten empfangenen Nummernbits benötigt. Damit werden die Zustandsübergänge ausgewertet und die Adresse des nächsten zur Entschlüsselung zu verwendenden Schlüssels bestimmt. Dieser wird aus dem Schlüsselspeicher SP ausgelesen und in ein Entschlüsselungsregister ER geladen. Dieses Entschlüsselungsregister ER ist ein 8 Bit-Ringschieberegister, dessen Ausgang seriell mit den Downstream-Daten in einer Entschlüsselungsschaltung EE mit Exklusiv-Oder-Gattern verknüpft wird und damit die Dechiffrierung der Downstream-Daten bewirkt. Während des letzten Zeitschlitzes, d.h. dem Zeitschlitz des Overhead-Bytes OH4, wird der Ausgang des Schieberegisters ER durch die Steuerlogik gesperrt, was einer Exklusiv-Oder-Verknüpfung mit O und somit keine Entschlüsselung bedeutet.

Das Sperren der Entschlüsselung wird auch mit einem externen Pin ermöglicht, um für Testzwecke das Einlegen von Schleifen ohne Entschlüsselung zu ermöglichen. Ebenso ist es zweckmäßig, wenn die Chiffrierung auf seiten der Schalteinheit TSU im zentralen optischen Teilnehmer-Anschlußknoten OLT deaktiviert werden kann.

An Hardware-Aufwand ist in jeder der peripheren optischen Netzabschlußeinheiten ONU demnach erforderlich:

- ein 8-Byte-Schlüsselspeicher SP,
- ein 8-Bit-Entschlüsselungsregister ER in Form eines Ringschieberegisters,
- ein Register zur Speicherung der Schlüsselnummerbits (4 Bit)im Rahmen einer Schaltung zur Schlüsselberechnung (SB), d.h. einer Kombinatorik zur Auswertung der Zustandsübergänge,
- eine Erzeugung der Steuersignale.

Die Chiffrierung nach der Erfindung läßt sich durch bestimmte Maßnahmen noch verbessern. Die Verwürfelung mit einer Exklusiv-Oder-Funktion mit einem für einen Rahmen konstanten Schlüssel hat den Nachteil, daß in nicht aktiven Zeitschlitzen, deren Inhalt konstant ist, ein Abbild des Schlüssels übertragen wird. Enthält ein Rahmen mehrere unbelegte Zeitschlitze, so läßt sich der Schlüssel durch Untersuchung auf Gleichheit der Zeitschlitze relativ einfach bestimmen.

Soll diese Möglichkeit jedoch ausgeschlossen werden, so muß man den Schlüssel innerhalb eines Rahmens in jedem Zeitschlitz verändern. Dazu wird aus dem Schlüssel sowohl auf der Seite des zentralen optischen Teilnehmer-Anschlußknotens OLT als auch auf der Seite der peripheren optischen Netzabschluß-Einheiten ONU eine identische Pseudo-Zufallsfolge generiert. Eine solche Folge kann durch ein rückgekoppeltes Schieberegister, das mit dem Startwert des Overhead-Bytes OH4 geladen wird, erzeugt werden. Dieser Scrambler erzeugt für jeden Zeitschlitz einen neuen Schlüssel. Konstante Muster in nicht aktiven Kanälen werden vermieden.

Der zusätzliche Hardware-Aufwand in den peripheren optischen Netzabschluß-Einheiten ONU besteht lediglich aus zwei zusätzlichen Exklusiv-Oder-Gattern, die in der Rückkopplung des Ringschieberegisters eingefügt sind, das für die serielle Entschlüsselung der Daten verwendet wird. Da die Verwürfelung in der Schalteinheit TSU im zentralen optischen Teilnehmer-Anschlußknoten OLT aufgrund der parallelen Bearbeitung der Daten ebenfalls eine parallele Exklusiv-Oder-Verknüpfung erfordert, ist die Erzeugung der Pseudo-Zufallsfolge des Schlüssels in der Schalteinheit TSU jedoch etwas aufwendiger (ca. 16 Exklusiv-Oder-Gatter).

Bezugszeichenliste

| | |
|---|---|
| EOC | = Meldungskanal |
| S1,S0 | = Spare-Bits |
| Bl1,Bl0 | = Parity-Bits |
| OH4 | = Overhead-Byte |
| N2,N1 | = Schlüsselnummer-Bits |
| N... | = Schlüsselnummer-Bits |
| S... | = Dechiffrierungsschlüssel für den |

nächsten = Rahmen

OLT = Zentraler optischer Teilnehmer-Knoten

ONU = Periphere optische Netzabschluß-Einheit

SP = Schlüsselspeicher

ER = Entschlüsselungsregister

EE = Entschlüsselungseinrichtung

SB = Schaltung zur Schlüsselberechnung

VS = Schlüsselspeicher

VR = Verschlüsselungsregister

VE = Verschlüsselungseinrichtung

TDU = Elekro-optische Auskoppeleinrichtung

TSU = Schalteinheit (Time Slot Interface Unit)

**Patentansprüche**

1. Passives optisches Netz (PON) mit mehreren peripheren optischen Netzabschluß-Einheiten (ONUs = Optical Network Units) und einem zentralen optischen Teilnehmer-Anschlußknoten (OLT = Optical Line Termination) zur Übertragung sowohl von Downstream-Daten, d.h. einer optischen Übertragung digitaler, binärer Signale in Abwärtsrichtung vom zentralen optischen Teilnehmer-Anschlußknoten zu den einzelnen peripheren optischen Netzabschluß-Einheiten, als auch von Upstream-Daten, d.h. einer optischen Übertragung digitaler, binärer Signale in Aufwärtsrichtung von den einzelnen peripheren optischen Netzabschluß-Einheiten zum zentralen optischen Teilnehmer-Anschlußknoten, wobei die digitalen, binären Signale einer jeden peripheren optischen Netzabschluß-Einheit einen Rahmenaufbau aufweisen, dessen letztes Byte (Overhead-Byte OH4) im Anschluß an die Payload-Bytes als Inhalt neben einem 4-Bit breiten Meldungskanal (EOC) zwei Parity Bits (BI1, BI0) und zwei Spare-Bits (S1, S0) enthält,
**dadurch gekennzeichnet,**
daß in einer Schalteinheit (Time Slot Interface Unit = TSU) im zentralen optischen Teilnehmer-Anschlußknoten (OLT) das über den Upstream-Weg empfangene OH4-Byte einer jeden der angeschlossenen peripheren optischen Netzabschlußeinheiten (ONUs) dazu verwendet wird, die Downstream-Payload-Daten des nächsten zu sendenden Rahmens für die entsprechende optische Netzabschluß-Einheit mit dem OH4-Byte zu verschlüsseln, und daß in dieser optischen Netzabschluß-Einheit in einer Entschlüsselungseinrichtung, in der in einem Schlüsselspeicher (SP) die als Schlüssel verwendeten OH4-Bytes gespeichert werden, der empfangene Rahmen mit demselben OH4-Byte entschlüsselt wird.

2. Passives optisches Netz nach Anspruch 1,
**dadurch gekennzeichnet,**
daß eine Einrichtung vorgesehen ist, mit welcher die Verzögerung zwischen dem Abspeichern eines Schlüssels in einer der peripheren optischen Netzabschluß-Einheiten (ONUs) und dem Empfang eines mit diesem Schlüssel chiffrierten Rahmens in dieser Netzabschluß-Einheit bestimmt wird.

3. Passives optisches Netz nach Anspruch 2
**dadurch gekennzeichnet,**
daß im Upstream-Weg von jeder der peripheren optischen Netzabschluß-Einheiten (ONUs) zum zentralen optischen Teilnehmer-Anschlußknoten (OLT) in den beiden zur Verfügung stehenden Spare-Bits (S1, S0) des den Schlüssel bildenden OH4-Bytes im Rahmen die zwei höchstwertigen Bits (N2 und N1) eines 3-Bit-Zählers gesendet werden, der somit die Schlüssel durchnumeriert, daß je zwei nacheinander gesendete unterschiedliche Schlüssel dabei die gleiche Schlüsselnummer erhalten, und daß in jeder peripheren optischen Netzabschluß-Einheit (ONU) ein 8-Byte-Speicher (SP) geführt ist, in dem die acht letzten Schlüssel unter der Adresse N = N2N1N0, d.h. ihrer vollständigen Schlüsselnummer, abgespeichert sind.

4. Passives optisches Netz nach Anspruch 3
**dadurch gekennzeichnet,**
daß die Schalteinheit (TSU) im zentralen optischen Teilnehmer-Anschlußknoten (OLT) für jede der angeschlossenen peripheren optischen Netzabschluß-Einheiten (ONUs) die letzten empfangenen Schlüssel, d.h. das letzte Byte (OH4) im Rahmen, abspeichert, die Payload-Bytes des nächsten zu sendenden Rahmens aller peripheren optischen Netzabschluß-Einheiten mit dem jeweiligen Schlüssel codiert und die mit den beiden höchstwertigen Zählerbits (N2 und N1) beaufschlagten Spare-Bits aus dem den Schlüssel bildenden letzten Byte (OH4) in die entprechenden Positionen des letzten Downstream-Bytes (OH4) einträgt, wobei dieses letztgenannte Byte in Downstream-Richtung nicht verschlüsselt wird.

5. Passives optisches Netz nach den Ansprüchen 3 und 4,
**dadurch gekennzeichnet,**
daß im Zuge der Entschlüsselung in einer Schaltung (SB) zur Schlüsselberechnung jeder peripheren optischen Netzabschluß-Einheit (ONU) aus den beiden mit den genannten Zählerbits (N2 und N1) beaufschlagten Spare-Bits eines empfangenen Rahmens der zur Chiffrierung des nächsten Rahmens verwendete Schlüssel decodiert wird, wozu die jeweils letzten Schlüsselnummer-Bits ($N2^{-1}$ und $N1^{-1}$) abgespeichert werden und aus dem Zustandsübergang dieser Bits das letzte Schlüsselbit (N0) der vollständigen Schlüsselnummer rekonstruiert wird.

6. Passives optisches Netz nach einem der Ansprüche 3 bis 5,
   **dadurch gekennzeichnet,**
   daß die Erstsynchronisation in den peripheren optischen Netzabschluß-Einheiten (ONUs) durch Wahl geeigneter Reset-Werte in den Schlüsselspeichern und den Schlüsselnummerregistern erleichtert wird.

7. Passives optisches Netz nach Anspruch 5,
   **dadurch gekennzeichnet,**
   daß das Auftreten nicht erlaubter Zustandsübergänge der jeweils letzten Schlüsselnummer-Bits dazu benutzt wird, einzelne Bitfehler bei der Übertragung der Schlüsselnummer zu korrigieren.

8. Passives optisches Netz nach Anspruch 7,
   **dadurch gekennzeichnet,**
   daß bei Auftreten eines nicht erlaubten Zustandsübergangs aufgrund eines Bitfehlers diese Schlüsselnummer ignoriert wird und stattdessen der korrekte Schlüssel, d.h. der letzte Schlüssel + 1, zur Decodierung benutzt wird, und daß zusätzlich ein Signalzeichen (Flag) gesetzt wird, das zur Verhinderung einer nochmaligen Korrektur anzeigt, daß eine Nummernkorrektur bereits stattgefunden hat.

9. Passives optisches Netz nach einem der vorhergehenden Ansprüche,
   **dadurch gekennzeichnet,**
   daß im zentralen optischen Teilnehmer-Anschlußknoten (OLT) in der Schalteinheit (TSU) ein Speicher (VS) für die Upstream-OH4-Bytes vorgesehen ist, der mindestens so viele Bytes aufweist, wie periphere optische Netzabschluß-Einheiten (ONUs) angeschlossen sind, z.B. 32 Speicher-Bytes für maximal 32 Netzabschluß-Einheiten.

10. Passives optisches Netz nach einem der vorhergehenden Ansprüche,
    **dadurch gekennzeichnet,**
    daß im zentralen optischen Teilnehmer-Anschlußknoten (OLT) die Daten zwischen der Schalteinheit (TSU) und einer elektro-optischen Auskoppeleinrichtung (TDU) für den Downstream-Betrieb über einen 8 Bit-breiten Bus in Form von Basic Blocks übertragen werden, die sich aus den Payload-Daten und den Overhead-Bytes aller peripheren optischen Netzabschluß-Einheiten (ONUs) zusammensetzen.

11. Passives optisches Netz nach Anspruch 10,
    **dadurch gekennzeichnet,**
    daß in der Schalteinheit (TSU) des zentralen optischen Teilnehmer-Anschlußknotens (OLT) eine Verschlüsselungsschaltung in Downstream-Richtung vorgesehen ist, die ein 8 Bit-Verschlüsselungsregister (VR) enthält, das mit dem OH4-Byte-Schlüssel geladen wird, der von der entsprechenden peripheren optischen Abschlußeinheit (ONU) im letzten Upstream-Basic-Block im OH4-Byte gesendet wurde.

12. Passives optisches Netz nach Anspruch 11,
    **dadurch gekennzeichnet,**
    daß acht Exklusiv-Oder-Gatter in einer Einrichtung (VE) zur Verschlüsselung der Payload-Daten vorgesehen sind, wobei während der Overhead-Bytes (OH1, OH2 und OH4) keine Verschlüsselung stattfindet und im OH4-Byte die Bits N2 und N1 des Schlüssels direkt in die entsprechenden Positionen der Spare-Bits (S1, S0) eingefügt werden.

13. Passives optisches Netz nach den Ansprüchen 11 und 12,
    **dadurch gekennzeichnet,**
    daß das Laden des 8 Bit-Verschlüsselungsegisters (VR) der Verschlüsselungsschaltung zur Zeit des jedem Paket von Daten der peripheren optischen Abschlußeinheiten (ONUs) vorangestellten Overhead-Bytes (OH1) vorgenommen wird.

14. Passives optisches Netz nach den Ansprüchen 11 bis 13,
    **dadurch gekennzeichnet,**
    daß im zentralen optischen Teilnehmer-Anschlußknoten (OLT) eine Steuerlogik vorgesehen ist, welche die Abspeicherung der Upstream-OH4-Bytes, das Laden der Schlüssel für die Downstream-Daten der nächsten peripheren optischen Abschlußeinheit (ONU) in das 8 Bit-Register (VR), die Freigabe der Verschlüsselung für die Payload-Daten und die Gewährleistung der Einfügung der Nummernbits (N2, N1) in das Downstream-OH4-Byte veranlaßt.

15. Passives optisches Netz nach einem der vorhergehenden Ansprüche,
    **dadurch gekennzeichnet,**
    daß in den peripheren optischen Netzabschluß-Einheiten (ONUs) jeweils eine Kontroll-Baugruppe vorgesehen ist, in welcher der 3 Bit-Zähler zur Adressierung des 8 Byte-Schlüsselspeichers (SP) geführt ist, in dem die letzten acht Schlüssel, d.h. die letzten 8 OH4-Bytes, abgespeichert werden, daß die beiden höchstwertigen Zählerbits (N2 und N1) dieses Zählers in den seriellen Datenstrom der Upstream-Daten eingefügt und daß das komplette OH4-Overhead-Byte unter der Adresse (N2, N1, N0) abgespeichert wird, wobei N0 das geringste signifikante Zählerbit (LSB = Least significant bit) darstellt.

16. Passives optisches Netz nach Anspruch 15, **dadurch gekennzeichnet,** daß in den peripheren optischen Netzabschluß-Einheiten (ONUs) zur Entschlüsselung in Downstream-Richtung in der Schaltung (SB) zur Schlüsselberechnung zusätzliche Register zur Speicherung der aktuellen und der letzten empfangenen Nummernbits vorgesehen sind, womit die Zustandsübergänge ausgewertet und die Adresse des nächsten zur Entschlüsselung zu verwendenden Schlüssels bestimmt werden, daß der zu verwendende Schlüssel aus dem Schlüssellspeicher (SB) ausgelesen und in ein Entschlüsselungsregister (ER) geladen wird, das als 8 Bit-Ringschieberegister realisiert ist, dessen Ausgang seriell mit den Downstream-Daten in einer Entschlüsselungseinrichtung (EE) exklusiv- oder-mäßig verknüpft ist, und daß während des letzten Zeitschlitzes, d.h. dem Zeitschlitz des OH4-Bytes, der Ausgang des 8 Bit-Ringschieberegisters durch eine Steuerlogik gesperrt ist, was eine Exclusiv-Oder-Verknüpfung mit 0 und somit keine Entschlüsselung bedeutet.

17. Passives optisches Netz nach einem der vorhergehenden Ansprüche, **dadurch gekennzeichnet,** daß der Schlüssel innerhalb eines Rahmens in jedem Zeitschlitz verändert wird, wozu aus dem Schlüssel sowohl auf der Seite des zentralen optischen Teilnehmer-Knotens (OLT) als auch auf der Seite der peripheren optischen Abschlußeinheiten (ONUs) eine identische Pseudozufallsfolge generiert wird.

18. Passives optisches Netz nach Anspruch 17, **dadurch gekennzeichnet,** daß die Pseudozufallsfolge mittels eines rückgekoppelten Schieberegisters gebildet wird, das mit dem Startwert des OH4-Bytes geladen wird.

**FIG 1**

| Payload | | EOC | S1 | S0 | BI1 | BI0 |

OH4

**FIG 2**

| Payload | | EOC | N2 | N1 | BI1 | BI0 |

OH4

**FIG 4**

N=00  S 010
S011
N=01  S100
S001
S101
N=10  S110
S111
N=11  S000

EP 0 674 456 A2

# FIG 3

| Payload DU unverschlüsselt | EOC_{n-2 DU} | 10(1) | BI_{n-2 DU} |

**Upstream-Daten**

OLT

| Payload DD unverschlüsselt | EOC_{n-1 DD} | leer | BI_{n-1 DD} |

**Downstream-Daten**

VS

**Schlüssel**

VR

VE

TSU

**Verschlüsselungsregister**

| EOC_{n-2 DU} | 10(1) | BI_{n-2 DU} |

**Verschlüsselung**

TDU

| Payload DU unverschlüsselt | EOC_{n-1 DU} | 11(0) | BI_{n-1 DU} |

| Payload DD verschlüsselt | EOC_{n DD} | 10(0) | BI_{n DD} |

ONU

SP

**Schlüsselspeicher**

| Zeitp. | Adr. N | Schlüssel | | |
|--------|--------|-----------|-----|------|
| n | 111 | EOC_{n DU} | 11 | BI_{n DU} |
| n-1 | 110 | EOC_{n-1 DU} | 11 | BI_{n-7} |
| n-2 | 101 | EOC_{n-2 DU} | 10 | BI_{n-2 DU} |
| n-3 | 100 | EOC_{n-3 DU} | 10 | BI_{n-3 DU} |
| n-4 | 011 | EOC_{n-4 DU} | 01 | BI_{n-4 DU} |
| n-5 | 010 | EOC_{n-5 DU} | 01 | BI_{n-5 DU} |
| n-6 | 001 | EOC_{n-6 DU} | 00 | BI_{n-6 DU} |
| n-7 | 000 | EOC_{n-7 DU} | 00 | BI_{n-7 DU} |

**Schlüsselberechnung**

SB

| 01(0) | 01(1) |

**Adresse: 100**

ER

EE

**Schlüssel**

**Entschlüsselregister**

| EOC_{n-3 DU} | 10(0) | BI_{n-3 DU} |

**Entschlüsselung**

**Upstream-Daten**

**Downstream-Daten**